# EUROPEAN PATENT APPLICATION

(11) **EP 3 011 839 A1**
(43) Date of publication of application: **27.04.2016**
(21) Application number: 15191055.1
(22) Date of filing: 22.10.2015
(51) Int. Cl.: A23K 40/30, A23K 50/10, A23K 20/158, A23K 20/24

(54) **A FOOD COMPOSITION FOR RUMINANT ANIMALS**

(30) Priority: 22.10.2014 IT MI20141818
(71) Applicant: Cantini, Fernando, 50136 Firenze (IT)
(72) Inventor: Cantini, Fernando, 50136 Firenze (IT)
(74) Representative: Giavarini, Francesco

(57) **Abstract**

A food composition for ruminant animals, in particular for the protection of biologically active substances from rumen degradation, characterized in that it comprises the following components:
- triglycerides of saturated fatty acids C₆ - C₂₂ in amounts ranging between 5-65%;
- calcium salts of fatty acids C₆ - C₂₂ in amounts ranging between 30-90%;
- saturated fatty acids C₆ - C₂₂ in amounts ranging between 5-50%,
said amounts being expressed by weight and being referred to the sum of said components.

## Description

The present invention relates to a food composition for ruminant animals, and more particularly to a food composition capable of ensuring high values of rumen by-pass for biologically active and high nutritional value substances, such as proteins, amino acids, vitamins, enzymes, carbohydrates and the like. In a further aspect, the present invention relates also to complementary feed and complete feed for ruminant animals comprising said food composition.

It is known that one of the main problems in ruminants breeding is the need to ensure a balanced food intake for the animal with substances having high nutritional value to ensure proper growth of the animal and, in the case of animals used for the production of milk, to allow obtaining a milk production quantitatively and qualitatively adequate.

For this purpose, the animal feed are normally integrated with biologically active substances, such as amino acids and in particular essential amino acids, proteins, vitamins and the like. However, at the level of the rumen of the animal, such substances are subject to microbial degradation typical of ruminant animals, making it essentially useless their administration, given that their digestion and decomposition at rumen level makes it impossible the actual use by the animal.

In addition, the microbial degradation of protein at the level of the rumen involves the production of a greater amount of ammonia in the rumen which, once absorbed, can cause more or less serious metabolic dysfunctions to the animal with a negative impact on the health of the animal itself.

Since many years there is therefore the problem of increasing, in the diets administered to ruminants, the energy intake and the proportion of protein and amino acids and / or vitamins and / or trace elements which are able to by-pass the rumen and achieve the lower gastrointestinal tract where the enzymatic digestion takes place.

To solve the problem of energy intake in feed it is common to add to the diet a certain percentage of animal fat and / or vegetable oils. However, it was found that the addition of such compounds in the rumen causes side effects markedly negative, that cancel any benefit. In particular it has been seen that the addition of fats and oils to the feed causes a reduction of the digestibility of the fiber and an inhibitory action on the activity of rumen bacteria.

Since a relatively long time it has been formulated the hypothesis that the rumen digestibility of the fiber would increase and the inhibition of the activity of bacteria would decrease when formation of calcium soaps, i.e. of chemical compounds consisting of fatty acids and calcium, takes place in the rumen. Starting from these assumptions, foods for ruminant animals have been developed and placed on the market, said foods containing calcium soaps of palm fatty acids and hydrogenated oils, in an attempt to solve the above problems.

For what concerns the increase of the percentage of rumen by-pass of proteins, amino acids, vitamins and/or trace elements, basically two methodologies have been established up to now:
- to increase the proportion of by-pass of protein, thermal treatments have been proposed working on temperatures and times of exposure to such temperatures of said proteins;
- to increase the proportion of by-pass of the amino acids, vitamins and trace elements, various techniques of microencapsulation have been developed.

The increase of the proportion of the protein by-pass due to the effect of the temperature and of the relative exposure times has, as a contraindication, the possible denaturation of a portion of these proteins due to the known Maillard reaction and is therefore a methodology which always involves an amount of risk inherent in the process itself.

The microencapsulation of the amino acids, vitamins and trace elements it is indeed a very expensive methodology that does not always reach the desired effects. It can in fact happens that at the digestive level - i.e. in the abomasum and in the lower gastrointestinal tract of the animal - there is a non-complete opening of the protective capsule, with the consequent lack of absorption of the compounds contained in the same capsule by the animal. In practice, with the technology of microencapsulation, the nutrients are efficiently protected at the level of the rumen but become less available in subsequent portions of the gastrointestinal system.

In addition, the need to protect a part of the biologically active substances in the rumen is in stark contrast with the need to make a part of them readily available in the rumen tract of the gastrointestinal system.

It is indeed known that it would be desirable and preferable to make available, in the rumen section of the animal, inorganic or organic non-protein nitrogen compounds, such as urea, which can be converted into amino acids and then into proteins by the bacterial microflora in the rumen.

Such administration, however, must be carefully controlled in both quantitative absolute (total amount of the administered urea compared to the feed) and in terms of progressive release in the rumen (the amount of urea as made available to the animal at rumen level over time), to avoid overdoses and related toxic effects on the bacterial microflora and on the animal.

A further problem of the technologies of the known type for the production of animal feed having high values of rumen by-pass is the difficulty of formulating the complete feed with the various nutritional supplements.

The complete feed is in fact usually produced with technologies of grinding or granulation or pelletization. Liquid or low-melting compounds, waxes and the like are therefore difficult to use in existing installations, because they would make dirty and jam the machines for grinding and pelletizing. In addition, the relatively low amount of complementary compounds with respect to the total amount of feed, makes it difficult their accurate dosage with consequent problems of possible non-uniformity of production among the various production batches.

It is therefore evident that foods for ruminant animals of known type have a number of problems that make their use not always optimal.

Based on these considerations, the main task of the present invention is to provide a food composition for ruminant animals which overcomes the drawbacks and problems described above.

Within this aim, an object of the present invention is to provide a food composition for ruminant animals, able to ensure high values of rumen by-pass for biologically active and high nutritional value substances.

Another object of the present invention is to provide a food composition for ruminant animals which does not require the use of microencapsulation technologies, or similar technologies at high costs.

Another object of the present invention is to provide a food composition for ruminant animals which ensures an efficient and complete release of biologically active and high nutritional value substances in the sections of the gastrointestinal system subsequent to the rumen. Another object of the present invention is to provide a food composition for ruminant animals which allows a gradual and controlled release of non-protein nitrogenous compounds, such as urea, at the level of the rumen.

A further object of the present invention is to provide a food composition for ruminant animals that allows to increase the energy intake provided by the feed to the animal.

Still a further object of the present invention is to provide a food composition for ruminant animals which can be easily used in existing installations of grinding and pelletizing of feed. Still another object of the present invention is to provide a feed supplement for ruminant animals comprising biologically active substances with high nutritional value and high energy content and which possesses high values of rumen by-pass for such substances.

Another object of the present invention is to provide a complete feed for ruminant animals comprising biologically active substances with high nutritional value and high energy content, also having high values of rumen by-pass for such substances, and which can be manufactured in the form of compounds that can be grinded or granulated or pelletized. Another object of the subject matter of the present invention is to provide a food composition, a feed supplement and a complete feed for ruminant animals which are easy to manufacture and at competitive costs.

This aim, these objects and others which will become apparent hereinafter are achieved by the present invention through a food composition for ruminant animals which is characterized in that it comprises the following components:
- Triglycerides of saturated fatty acids C₆ - C₂₂ in amounts ranging between 5-65%;
- Calcium salts of fatty acids C₆ - C₂₂ in amounts ranging between 30-90%;
- Saturated fatty acids C₆ - C₂₂ in amounts ranging between 5-50%,
said amounts being expressed by weight and being referred to the sum of said components. Indeed it was seen that a food composition for ruminant animals so conceived has a set of features and properties which allow to overcome the drawbacks and problems described above.

In particular it was seen that by treating suitably (as better described below) animal food and biologically active and high nutritional value substances, such as proteins, amino acids, vitamins, enzymes, carbohydrates and the like, with the food compositions according to the present invention it is possible to obtain foods for ruminant animals to be used for example as:
- rumen by-pass source of vegetable and/or animal protein;
- rumen by-pass source of amino acids;
- rumen by-pass source of vitamins;
- rumen by-pass source of trace elements;
- rumen by-pass source of mono and diglycerides of C₁ to C₁₂ organic acids;
- rumen by-pass source of energy.

In addition, as better explained hereinafter and illustrated in the examples, the food compositions according to the present invention may also be used for the preparation of complementary (supplement) feed, and more in general of foods for animals, with characteristics of controlled and gradual (slow-release) release at the level of the rumen of the animal. In particular the food compositions according to the present invention can be employed for the preparation of complementary feed that can provide a gradual and controlled release of urea and urea derivatives at the level of the rumen of the animal.

A widely preferred embodiment of the food composition for ruminants according to the present invention provides that said composition has a melting point higher than 80° C.

For purposes of the present invention, the determination of the melting point is performed according to ISO 6321: 2002 "Animal and vegetable fats and oils - Determination of melting point in open capillary tubes (slip point)."

In particular, the melting point of the food composition for ruminants according to the present invention is preferably between 90° C and 100° C.

In this way, being the melting temperature greater than that of the rumen of the animal (about 40° C), the dissolution of the compositions at the level of the rumen is avoided, thereby allowing the food compositions of the present invention to maintain their protective efficacy during the transit and stay in the rumen tract of the gastrointestinal apparatus of the animal.

A further advantage is given by the fact that the melting temperature of the food compositions of the present invention is sufficiently high to allow its use in existing installations of grinding and pelletizing of feed; at the same time their melting temperature is such to allow to bring the food compositions of the present invention to conditions of fluidity such as to be sprayed from the normal nozzles of an industrial food matrix.

In fact, for their practical use (as better described in the following) the food compositions of the present invention can be nebulized in the liquid state on a food matrix, such as a protein meal (possibly added with other biologically active substances), so as to obtain a complementary feed. Once cooled, the product is in the form of a free-flowing powder with a melting point high enough to make possible its mixing with other compounds in order to obtain a complete feed by grinding or pelletizing.

Preferred examples of the food composition for ruminant animals, according to the present invention comprise the following amounts by weight, always referred to the sum of said components:
- Triglycerides of saturated fatty acids C₆ - C₂₂ in an amount ranging between 15-60%;
- Calcium salts of fatty acids C₆ - C₂₂ in amounts ranging between 35-70%;
- Saturated fatty acids C₆ - C₂₂ in amounts ranging between 5-40%;
and, more preferably:
- Triglycerides of saturated fatty acids C₆ - C₂₂ in amounts ranging between 35-55%;
- Calcium salts of fatty acids C₆ - C₂₂ in amounts ranging between 35-55%;
- Saturated fatty acids C₆ - C₂₂ in amounts ranging between 10-30%,
and, still more preferably:
- Triglycerides of saturated fatty acids C₆ - C₂₂ in amounts ranging between 45-55%;
- Calcium salts of fatty acids C₆ - C₂₂ in amounts ranging between 35-45%;
- Saturated fatty acids C₆ - C₂₂ in amounts ranging between 10-20%,

In the above cases, said amounts are expressed by weight and are referred to the sum of said components.

Indeed, it was verified that the food compositions for ruminant animals according to the present invention shows a set of optimum characteristics from the chemical-physical standpoint. It is indeed possible, by using the compositions of the inventions, to obtain complementary feeds and complete feeds in which the food compositions for ruminant animals of the present invention provide a coating on the biologically active substances which is not attacked by the rumen bacteria, thereby achieving a high level of rumen by-pass for such substances.

This is also possible because the food compositions according to the present invention have, as previously mentioned, a melting temperature higher than the temperature of the rumen of the animal, avoiding their dissolution at the level of the rumen. At the same time, once they arrive into the abomasum, the coating thus obtained allows the release of said biologically active substances and the consequent absorption by the animal.

Preferably the fatty acids, in their various forms in which they are present (triglycerides, Ca salts, free acids) are fatty acids C₁₂ - C₁₈, and more preferably comprise palmitic acid and / or stearic acid.

The food compositions for ruminant animals according to the present invention can be conveniently used to prepare complementary feed for ruminant animals comprising one or more biologically active substances. For purposes of the present invention, the term "biologically active" refers to those substances that once administered to the animal take part in physiological processes that take place in the animal organism.

Examples of such biologically active substances are: proteins and protein foods (such as protein meals), amino acids, vitamins, sugars and carbohydrates, oils and fats and their derivatives, urea and urea derivatives, trace elements, pharmacologically active principles and essential oils.

Generally, a complementary (supplement) feed for ruminant animals according to the present invention may comprise from about 50 to about 95% by weight of said one or more biologically active substances and from about 5 to about 50% by weight of a food composition according to the present invention.

Preferably, said complementary feed may comprise from about 65 to about 85% by weight of said one or more biologically active substances and from about 15 to about 35% by weight of a food composition according to the present invention.

The above amounts are referred to the sum of said one or more biologically active substances and the food composition according to the present invention.

From the point of view of production, the complementary feed according to the present invention can be conveniently prepared using conventional equipment for mixing the various components. The following describes an example of a process of preparation of a feed supplement in which a protein flour is added with other biologically active substances and with a food composition according to the invention.

The protein flour, taken from a storage silo is conveyed on a horizontal screw conveyor which transports it in such a way that the protein meal always covers the turns of the screw conveyor.

Possible other biologically active substances that can be added to the feed supplement, such as amino acids and/or vitamins and/or trace elements and/or mono and di-glycerides of C₁ to C₁₂ organic acids and/or glycerol, are prepared in the desired proportions in one or more mixers and maintained always in motion during the production phase to prevent any de-mixing and inhomogeneities.

The food composition for ruminant animals according to the present invention is produced in a reactor and heated to a temperature such as to be sufficiently fluid to be sprayed (nebulized) onto the protein flour (either alone or mixed with other biologically active substances as described above).

In the horizontal screw conveyor transporting the protein flour, a first portion - with a variable length depending on the hourly flow to be obtained and the diameter of the screw conveyor - is used in a way that the turns of the screw are completely covered by the protein flour. In a second section, following the first, of the screw conveyor any desirable further biologically active substances (such as those previously described) can be added to and mixed with the protein flour. Finally, in a third final section of the screw conveyor, the food composition according to the invention is sprayed on the protein flour, which thus forms a rumen-by-pass external protective film onto the granule of the flour protein. The product so formed then enters in a cooling system where, by lowering the temperature to room temperature, the protective film constituted by the food composition according to the invention becomes solid, thus obtaining a free flowing powder that can be easily bagged.

The complementary feed obtained in this way can then be used for the preparation of a complete feed by mixing with other ingredients, thus obtaining a feed that can be easily ground and pelleted with known technologies.

### EXAMPLES

### Example 1

The example is related to the preparation of a feed supplement consisting of soybean flour, added with hydroxy-analogous of methionine and lysine and with a food composition according to the present invention.

The food composition according to the present invention is constituted by a mixture containing 50% of triglycerides of palmitic acid and stearic acid (in a ratio between them of approximately 1: 1), 38% of calcium salts of palmitic acid and stearic acid (in a ratio between them of about 1: 1) and 12% of free palmitic acid and stearic acid (in a ratio between them of approximately 1: 1). This composition is maintained at a temperature above its melting point in order to be used in the fluid state in the subsequent steps.

In a horizontal screw with a diameter of 300 mm, soybean flour is made to advance with a flow rate of 5 ton / hour.

A mixture of hydroxy-analogous of methionine and lysine is sprayed on the soybean flour, in a quantity respectively equal to 2.3% by weight and 4.2% by weight respect to the soybean flour. The two compounds are immediately absorbed into the flour.

Thereafter, in succession, the food composition according to the present invention previously described is sprayed on the soybean flour, in an amount equal to 20% by weight with respect to the total weight of the feed. The complementary feed thus obtained is then cooled to ambient temperature and is ready for bagging.

In order to evaluate the protective efficiency in the rumen of the composition according to the present invention, some tests were performed in situ with the so-called method of the Nylon Bags. With this method, the food (in this case the feed supplement prepared as previously described) is placed in nylon bags inserted through a fistula into the rumen of the animal. The rumen degradability was evaluated by determining the percentage of nutrients (proteins, methionine, lysine) which is not degraded compared to the initial content. For comparison purposes, a similar test was conducted using a complementary feed non containing the composition according to the invention.

The results are reported in the table below.

| | Comparison | Example 1 |
|---|---|---|
| PG % | 46.10 | 47.40 |
| RUP % | 24.80 | 40.29 |
| RUP/PG % | 53.80 | 85.00 |
| MET/RUP % | 1.28 | 6.11 |
| LIS/RUP % | 5.71 | 11.18 |

| | | |
|---|---|---|
| PG: Crude protein before the test (% of total composition); RUP: Protein residual not degraded at the end of the test (% of total composition); RUP / PG: Percentage of residual protein not degraded compared with the original content; MET / RUP: Percentage of methionine with respect to proteins not degraded; LIS / RUP: Percentage of lysine with respect to proteins not degraded. | | |

The protective efficacy at rumen level of the composition according to the present invention is clear from the above figures. The initial content of crude protein is in fact substantially the same for both the untreated soybean flour and the soybean flour treated with the composition of the present invention.

After the test, the residual content of non-degraded proteins in untreated flour is equal to 24.80% of the total (corresponding to 53.80% of the initial content), while in the treated flour the residual content of non-degraded protein is equal to 40.29% of the total (corresponding to 85.00% of the initial content). In essence, while in the untreated flour the protein content is almost halved, in the flour treated with the composition of the present invention, the protein content remained very close to the initial value. A similar pattern occurs with methionine and lysine.

The test in situ shows clearly therefore the high value of rumen by-pass obtainable with the food composition of the present invention.

### Example 2

The test described in Example 1 was repeated but without addition of the hydroxy-analogous of methionine and lysine, obtaining a complementary feed comprising about 80% of soybean flour and about 20% of the food composition according to the present invention described in the previous example.

Also in this case, the protective efficiency in the rumen of the composition according to the present invention was evaluated by the method of Nylon Bags. The results are shown in the table below.

| | Comparison | Example 2 |
|---|---|---|
| PG % | 46.10 | 45.90 |
| RUP % | 24.80 | 39.02 |
| RUP/PG % | 53.80 | 85.00 |

| | | |
|---|---|---|
| PG: Crude protein before the test (% of total composition); RUP: Protein residual not degraded at the end of the test (% of total composition); RUP / PG: Percentage of residual protein not degraded compared to the initial content. As clearly shown from the above data, the residual content of non-degraded protein in the flour treated with the composition of the present invention is equal to 39,02% of the total (corresponding to 85.00% of the initial content). Also in this case, therefore, in the flour treated with the composition of the present invention the value of rumen by-pass is extremely high and the protein content remained essentially very close to the initial value. | | |

### Example 3

The example is related to the preparation of a feed supplement consisting of urea coated with a food composition according to the present invention.

For this purpose, urea granules were sprayed with the same food composition of the present invention used in the preceding examples in the ratio of about 80:20 by weight.

Testing of the release in the rumen of urea treated with the food composition of the present invention have shown that the percentage of release fluctuates around 12% per hour. In practice there was a gradual and controlled release of urea in the rumen, with a substantially linear trend. This finding is extremely important since in these conditions the rumen bacteria can transform the urea into microbial protein with high nutritional value, without any danger of intoxication of the animal. In other words, the hourly quantity of urea which is released in the rumen is sufficient to ensure an adequate synthesis of amino acids and proteins by rumen bacteria, and at the same time is sufficiently low to avoid the onset of toxic effects on the bacterial microflora of the rumen and to the animal itself.

According to what described above, it is clear that the food composition for ruminant animals, according to the present invention, fully meets the tasks and purposes previously mentioned. Based on the description given, other features, modifications or improvements are possible. Such features, modifications and improvements are therefore to be considered part of the present invention as defined in the appended claims.

## Claims

1. A food composition for ruminant animals, **characterized in that** it comprises the following components:
- triglycerides of saturated fatty acids C₆ - C₂₂ in amounts ranging between 5-65%;
- calcium salts of fatty acids C₆ - C₂₂ in amounts ranging between 30-90%;
- saturated fatty acids C₆ - C₂₂ in amounts ranging between 5-50%,
said amounts being expressed by weight and being referred to the sum of said components.

2. The food composition for ruminant animals, according to claim 1, **characterized by** having a melting point above 80 °C.

3. The food composition for ruminant animals, according to claim 1 or 2, **characterized by** having a melting point between 90 °C and 100 °C.

4. The food composition for ruminant animals, according to one or more of the preceding claims, **characterized in that** it comprises the following components:
- triglycerides of saturated fatty acids C₆ - C₂₂ in amounts ranging between 15-60%;
- calcium salts of fatty acids C₆ - C₂₂ in amounts ranging between 35-70%;
- saturated fatty acids C₆ - C₂₂ in amounts ranging between 5-40%,
said amounts being expressed by weight and being referred to the sum of said components.

5. The food composition for ruminant animals, according to claim 4, **characterized in that** it comprises the following components:
- triglycerides of saturated fatty acids C₆ - C₂₂ in amounts ranging between 35-55%;
- calcium salts of fatty acids C₆ - C₂₂ in amounts ranging between 35-55%;
- saturated fatty acids C₆ - C₂₂ in amounts ranging between 10-30%,
said amounts being expressed by weight and being referred to the sum of said components.

6. The food composition for ruminant animals, according to claim 5, **characterized in that** it comprises the following components:
- triglycerides of saturated fatty acids C₆ - C₂₂ in amounts ranging between 45-55%;
- calcium salts of fatty acids C₆ - C₂₂ in amounts ranging between 35-45%;
- saturated fatty acids C₆ - C₂₂ in amounts ranging between 10-20%,
said amounts being expressed by weight and being referred to the sum of said components.

7. The food composition according to one or more of the preceding claims, **characterized in that** said fatty acids, in their various forms in which they are present (triglycerides, Ca salts, free acids) are fatty acids C₁₂ - C₁₈.

8. The food composition according to one or more of the preceding claims, **characterized in that** said fatty acids, in their various forms in which they are present (triglycerides, Ca salts, free acids) are palmitic acid and/or stearic acid or mixtures thereof.

9. A supplement feed for ruminant animals, **characterized in that** it comprises one or more biologically active substances and a food composition according to one or more of the preceding claims.

10. The supplement feed for ruminant animals, according to claim 9, **characterized in that** said biologically active substances are selected from one or more of the following species: proteins and protein foods, amino acids, vitamins, sugars and carbohydrates, oils and fats and their derivatives, urea and urea derivatives, trace elements, pharmacologically active principles.

11. The supplement feed for ruminant animals, according to claim 9 or 10, **characterized in that** it comprises from 50 to 95% by weight of said one or more biologically active substances and from 5 to 50% by weight of said food composition.

12. The supplement feed for ruminant animals, according to claim 11, **characterized in that** it comprises from 65 to 85% by weight of said one or more biologically active substances and from 15 to 35% by weight of said food composition.

13. A feed for ruminants **characterized by** comprising a food composition according to one or more of claims 1 to 8.

14. A grindable / pelletable feed for ruminant animals **characterized by** comprising a feed supplement according to one or more of claims 9 to 12.
